# EUROPÄISCHE PATENTSCHRIFT

(11) **EP 1 154 197 B1**
(45) Veröffentlichungstag und Bekanntmachung des Hinweises auf die Patenterteilung: **20.01.2010**
(21) Anmeldenummer: 01111011.1
(22) Anmeldetag: 08.05.2001
(51) Int. Cl.: F21S 8/10, F21V 8/00, F21W 101/14

(54) **Stabförmiger Lichtleiter**
Rod-shaped light guide
Guide de lumière en forme de barre

(30) Priorität: 10.05.2000 DE 10022780
(43) Veröffentlichungstag der Anmeldung: 14.11.2001
(73) Patentinhaber: Hella KGaA Hueck & Co., 59552 Lippstadt (DE)
(72) Erfinder: Neumann, Cornelius Dr., 33649 Bielefeld (DE)

(56) Entgegenhaltungen:
- EP-A- 0 515 921
- EP-A- 0 935 091
- EP-A- 1 078 816
- EP-A- 1 146 281
- WO-A-98/47737
- DE-A- 4 129 094

## Beschreibung

Die Erfindung betrifft einen stabförmigen Lichtleiter, der im wesentlichen als Prismenstab ausgebildet ist, mit mindestens einer Stirnfläche als Lichteinkoppelfläche und einer in Richtung einer Längsachse angeordneten reflektierenden Fläche mit einer Vielzahl von lichtablenkenden Prismen und einer der reflektierenden Fläche gegenüberliegenden Lichtaustrittsfläche und einer der Lichtaustrittsfläche vorgelagerten Abstrahlebene, zu der das aus der Lichtaustrittsfläche austretende Licht mit seiner Abstrahlrichtung senkrecht angeordnet ist.

Stabförmige Lichtleiter werden bei Kraftfahrzeugen z. B. als Signalleuchte oder zur Beleuchtung von Anzeigeeinrichtungen verwendet.

Aus der gattungsbildenden DE 41 29 094 A1 und aus der DE 198 03 518 A1 sind stabförmige Lichtleiter bekannt, die in Richtung einer Längsachse angeordnete reflektierende Flächen mit einer Vielzahl von lichtablenkenden Prismen aufweisen. Der reflektierenden Fläche parallel zur Längsachse gegenüberliegend ist dabei jeweils eine Lichtaustrittsfläche angeordnet. Die stabförmigen Lichtleiter sind im Wesentlichen zylindrisch ausgebildet. Über mindestens eine der Stirnflächen der Lichtleiter wird Licht eingekoppelt, das nach Totalreflektion über die Prismen, die verspiegelt sind, radial, d. h. senkrecht zur Lichtaustrittsfläche ausgekoppelt wird. Gegenüber einer parallel zur Längsachse angeordneten Abstrahlebene ist die Abstrahlrichtung des aus der Lichtaustrittsfläche austretenden Lichtes daher ebenfalls senkrecht angeordnet.

Nachteilig bei den bekannten Lichtleitern ist, dass bei einem stabförmigen Lichtleiter, dessen Längsachse gegenüber der Abstrahlebene geneigt ist, eine stark asymmetrische und optisch verzerrte Lichtverteilung bezüglich der Abstrahlebene besteht. Aus Einbau- bzw. Platzgründen, insbesondere bei modernen Fahrzeugkarosserien, kann es jedoch notwendig sein, den stabförmigen Lichtleiter gegenüber der vorgesehenen Abstrahlebene um einen Neigungswinkel zu neigen.

Die bekannten stabförmigen Lichtleiter sind aus den obigen Gründen jedoch dazu wenig geeignet.

Aus der nachveröffentlichten EP 1 146 281 A1 ist ein stabförmiger Lichtleiter bekannt, der reflektierende Flächen mit einer Vielzahl von Licht ablenkenden Prismen aufweist. Eine Längsachse des Lichtleiters ist gegenüber einer Abstrahlebene um einen Neigungswinkel geneigt angeordnet. Ein elliptischer Querschnitt des Prismenstabs ist nicht offenbart.

Aufgabe der vorliegenden Erfindung ist es daher, die bekannten Lichtleiter so zu verbessern bzw. zu optimieren, dass auch bei einer vorgesehenen Neigung gegenüber der Abstrahlebene eine optimierte gleichmäßige Lichtverteilung gegenüber der Abstrahlebene erreicht wird.

Diese Aufgabe wird erfindungsgemäß in Verbindung mit dem Oberbegriff des Anspruches 1 dadurch gelöst, dass die Längsachse gegenüber der Abstrahlebene um einen Neigungswinkel β_{Pf} geneigt ist und dass der quer zur Längsachse angeordnete Querschnitt gegenüber einem Querschnitt eines neigungswinkelfreien Prismenstabs um einen Scherwinkel β_{sch} geschert ist, derart, dass der Querschnitt des Prismenstabes elliptisch ausgebildet ist.

Durch die Scherung des quer zur Längsachse angeordneten Querschnittes lässt sich die Lichtverteilung in vorgesehener Abstrahlrichtung, d. h. senkrecht zur Abstrahlebene im Hinblick auf die Neigung der Längsachse optimieren. Der lichttechnische Wirkungsgrad gegenüber einem "nur gekippten" stabförmigen Lichtleiter wird dadurch erheblich erhöht. Erfindungsgemäß ist der Querschnitt des geneigten Prismenstabs elliptisch ausgebildet. Unter Berücksichtigung des Scherwinkels entspricht der elliptische Querschnitt somit einem im Wesentlichen rund ausgebildeten Querschnitt eines neigungsfreien Prismenstabs.

Gemäß einer bevorzugten Ausführungsform der Erfindung entspricht der Scherwinkel β_{sch} etwa dem Neigungswinkel β_{Pf.} Durch eine dem Neigungswinkel β_{Pf} entsprechende Scherung kann die Neigung des Prismenstabs gegenüber der Abstrahlebene optimal ausgeglichen werden.

Nach einer weiteren bevorzugten Ausführungsform der Erfindung werden die Prismen der reflektierenden Fläche an die durch den Neigungswinkel vorgegebene Neigung angepasst. Durch die Anpassung der Prismen kann sichergestellt werden, dass das aus der Lichtaustrittsfläche austretende Licht etwa senkrecht zur Lichtabstrahlebene verläuft.

Gemäß einer weiteren bevorzugten Ausführungsform der Erfindung ist die dem Neigungswinkel β_{Pf} zugewandte Fläche gegenüber einem ersten Neigungswinkel ρ₁ eines neigungswinkelfreien Prismenstabs um einen Winkel Δρ angestellt und die dem Neigungswinkel β_{Pf} abgewandte Fläche gegenüber einem zweiten Neigungswinkel ρ₂ eines neigungswinkelfreien Prismenstabs um den Winkel Δρ abgesenkt.

Durch die Anstellung des ersten Neigungswinkels ρ₁ um einen Winkel Δρ und die entsprechende Absenkung des zweiten Neigungswinkels ρ₂ um den Winkel Δρ ist es möglich, das Licht in der vorgesehenen Abstrahlrichtung aus der Lichtaustrittsfläche auszukoppeln.

Nach einer weiteren bevorzugten Ausführungsform der Erfindung entspricht der Winkel ρ₁ etwa dem Neigungswinkel β_{Pf.}

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

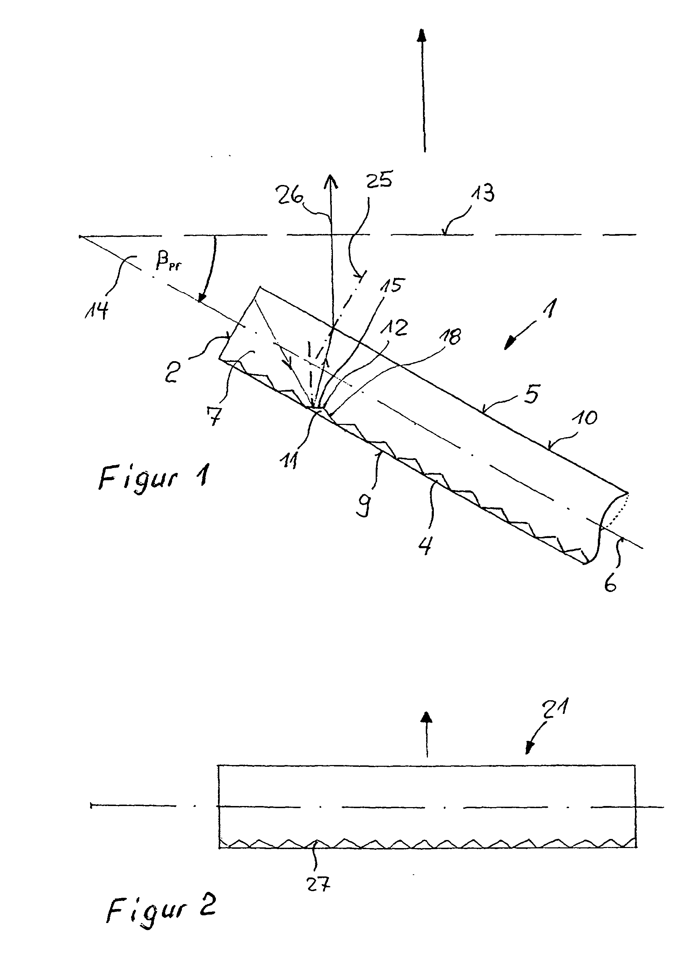

- Figur 1:: Eine Seitenansicht eines gegenüber einer Abstrahlebene geneigten stabförmigen Lichtleiters in schematischer Darstellung,
- Figur 2:: eine Seitenansicht eines stabförmigen Lichtleiters nach dem Stand der Technik mit parallel zur Längsachse angeordneter Abstrahlebene,

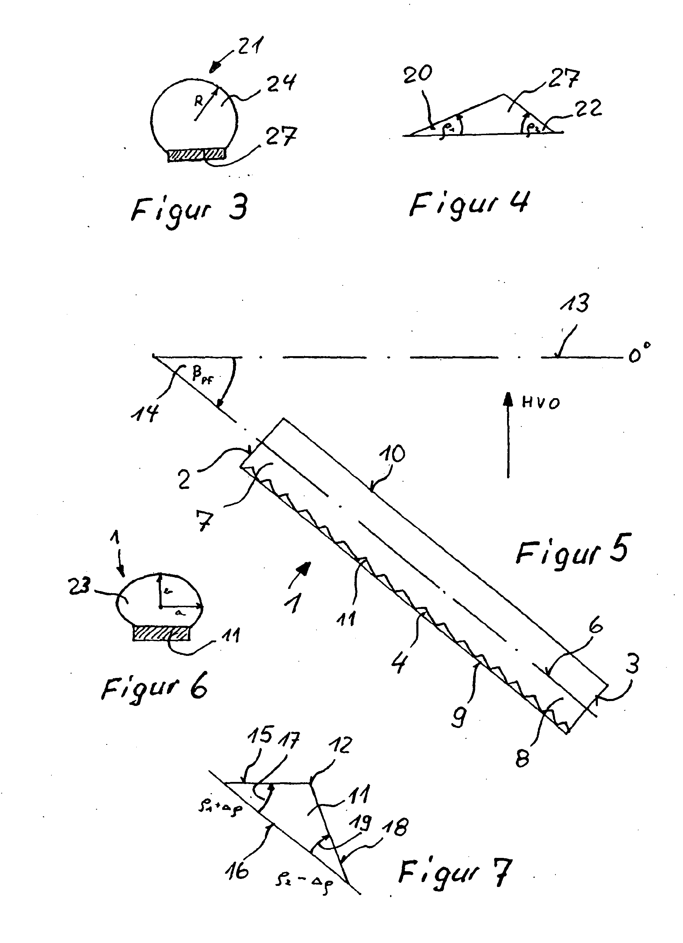

- Figur 3:: einen Querschnitt durch den stabförmigen Lichtleiter von Figur 2,
- Figur 4:: eine Seitenansicht eines Prismas von Figur 2 in vergrößerte Darstellung,
- Figur 5:: eine Seitenansicht eines gegenüber der Abstrahlebene geneigten Lichtleiters, der gegenüber dem Lichtleiter von Figur 2 um den Neigungswinkel β_{sch} geschert ist,
- Figur 6:: einen Querschnitt durch den Lichtleiter von Figur 5,
- Figur 7:: eine vergrößerter Darstellung eines einzelnen Prismas des Lichtleiters von Figur 5 in vergrößerter Darstellung.

Ein stabförmiger Lichtleiter besteht im wesentlichen aus einem Prismenstab 1 mit einer ersten Stirnfläche 2, einer zweiten Stirnfläche 3, einer reflektierenden Fläche 4 und einer Lichtaustrittsfläche 5.

Quer zu seiner Längsachse 6 weist der stabförmige Lichtleiter bzw. der Prismenstab 1 an einem ersten Ende 7 die erste Stirnfläche 2 und an seinem dem ersten Ende 7 abgewandten zweiten Ende 8 die zweite Stirnfläche 3 auf. An seiner Unterseite 9 wird der Prismenstab 1 von der reflektierenden Fläche 4 und an seiner der Unterseite 9 gegenüberliegenden Oberseite 10 wird der Prismenstab durch die Lichtaustrittsfläche 5 begrenzt.

Den Stirnflächen 2, 3 ist jeweils eine nicht dargestellte Lichtquelle vorgelagert. Die Stirnflächen 2, 3 sind als Lichteinkoppelflächen ausgebildet. Die reflektierende Fläche 4 weist eine Vielzahl von lichtablenkenden Prismen 11 auf, deren Dachkanten 12 quer zur Längsachse 6 angeordnet sind. Gegenüber einer der Lichtaustrittsfläche 5 vorgelagerten Abstrahlebene 13 ist der Prismenstab 1 mit seiner Längsachse 6 um einen Neigungswinkel β_{Pf} 14 geneigt bzw. gepfeilt. Die vorgesehene Abstrahlrichtung bzw. Hauptabstrahlrichtung des stabförmigen Lichtleiters ist etwa senkrecht zur Abstrahlebene 13 angeordnet.

Das Prisma 11 weist zwischen seiner dem Neigungswinkel β_{Pf} zugewandten ersten Fläche 15 und seiner gegenüber der Dachkante 12 liegenden Grundfläche 16 einen ersten Neigungswinkel 17 und zwischen seiner der ersten Fläche 15 benachbarten zweiten Fläche 18 und der Grundfläche 16 einen zweiten Neigungswinkel 19 auf. Der erste Neigungswinkel 17 ist gegenüber einem ersten Neigungswinkel ρ₁ 20 eines Prismas 27 eines neigungswinkelfreien Prismenstabs 21 um einen Winkel Δρ angestellt. Der zweite Neigungswinkel 19 ist gegenüber einem zweiten Neigungswinkel ρ₂ 22 des Prismas 27 des neigungswinkelfreien Prismenstabs 21 um den Winkel Δρ abgesenkt.

Der Prismenstab 1 weist beispielsweise einen elliptischen Querschnitt 23 auf, der gegenüber einem beispielsweise runden Querschnitt 24 des neigungswinkelfreien Stabes 21 um einen dem Neigungswinkel β_{Pf} 14 entsprechenden Scherwinkel β_{sch} geschert ist.

Ein über die erste Stirnfläche 2 eingekoppelter Lichtstrahl 26 wird beispielsweise an der ersten Fläche 15 des Prismas 11 gebrochen bzw. durch dessen Verspiegelung total reflektiert und an der Lichtaustrittsfläche 5 ausgekoppelt, wobei der Lichtstrahl 26 vom Einfallslot 25 weg gebrochen wird, so dass er etwa rechtwinklig zur Abstrahlebene 13 verläuft.

## Patentansprüche

1. Stabförmiger Lichtleiter, der im wesentlichen als Prismenstab (1) ausgebildet ist, mit mindestens einer Stirnfläche (2) als Lichteinkoppelfläche und einer in Richtung einer Längsachse (6) angeordneten reflektierenden Fläche (4), mit einer Vielzahl von lichtablenkenden Prismen (11) und einer der reflektierenden Fläche (4) gegenüberliegenden Lichtaustrittsfläche (5) und einer der Lichtaustrittsfläche (5) vorgelagerten Abstrahlebene (13), zu der das aus der Lichtaustrittsfläche (5) austretende Licht (26) mit seiner Abstrahlrichtung senkrecht angeordnet ist, **dadurch gekennzeichnet, dass** die Längsachse (6) gegenüber der Abstrahlebene (13) um einen Neigungswinkel β_{Pf} (14) geneigt ist und dass der quer zur Längsachse (6) angeordnete Querschnitt (23) gegenüber einem Querschnitt (24) eines neigungswinkelfreien Prismenstabs (21) um einen Scherwinkel β_{sch} geschert ist, derart, dass der Querschnitt (23) des Prismenstabes (1) elliptisch ausgebildet ist.

2. Stabförmiger Lichtleiter nach Anspruch 1, **dadurch gekennzeichnet, dass** der Scherwinkel β_{sch} im Größenbereich des Neigungswinkels β_{Pf} (14) liegt.

3. Stabförmiger Lichtleiter nach Anspruch 2, **dadurch gekennzeichnet, dass** der Scherwinkel β_{sch} etwa dem Neigungswinkel β_{Pf} (14) entspricht.

4. Stabförmiger Lichtleiter nach einem der Ansprüche 1 bis 3, **dadurch gekennzeichnet, dass** die Prismen (11) der reflektierenden Fläche (4) an die durch den Neigungswinkel β_{Pf} (14) vorgegebene Neigung angepasst werden.

5. Stabförmiger Lichtleiter nach einem der Ansprüche 1 bis 4, **dadurch gekennzeichnet, dass** die dem Neigungswinkel β_{Pf} (14) zugewandte erste Fläche (15) der Prismen (11) gegenüber einem ersten Neigungswinkel ρ₁ eines Prismas (27) eines neigungswinkelfreien Prismenstabs (21) um einen Winkel Δρ angestellt und dass die dem Neigungswinkel β_{Pf} (14) abgewandte zweite Fläche (18) gegenüber einem zweiten Neigungswinkel ρ₂ des Prismas (27) des neigungswinkelfreien Prismenstabs (21) um den Winkel Δρ abgesenkt ist.

6. Stabförmiger Lichtleiter nach einem der Ansprüche 1 bis 5, **dadurch gekennzeichnet, dass** die einander gegenüberliegenden Stirnflächen (2, 3) an die Neigung des Prismenstabs (1) angepasst sind.

## Claims

1. Rod-shaped light guide mainly designed as a prism rod (1) comprising at least one face (2) acting as the light input area, a reflecting area (4) located along a longitudinal axis (6) and holding a plurality of light-deflecting prisms (11), a light output area (5) located opposite the reflecting area (4), and a light emission plane (13) located ahead of the light output area (5) such that the light (26) emitted from the light output area (5) vertically hits the light emission plane (13), **characterized in that** the longitudinal axis (6) and the light emission plane (13) are at a tilt angle β_{pf} (14) and that the section (23) cutting orthogonally across the longitudinal axis (6) and the section (24) across a non-tilting prism rod (21) shear at an angle β_{sch} such that the cross-section (23) through the prism rod (1) is of an elliptic shape.

2. Rod-shaped light guide of claim 1, **characterized in that** the shear angle β_{sch} is in the same size range as the tilt angle β_{Pf} (14).

3. Rod-shaped light guide of claim 2, **characterized in that** the shear angle β_{sch} is more or less equivalent to the tilt angle β_{Pf} (14).

4. Rod-shaped light guide of claims 1 to 3, **characterized in that** the prisms (11) on the reflecting area (4) adapt to the inclination set by the tilt angle β_{pf} (14).

5. Rod-shaped light guide of claims 1 to 4, **characterized in that** the first surface (15) of the prisms (11) facing towards the tilt angle β_{pf} (14) pitches at an angle Δρ towards a first tilt angle ρ₁ of a prism (27) of a non-tilting prism rod (21) and that the second surface (18) facing away from the tilt angle β_{pf} (14) pitches at an angle Δρ away from a second tilt angle ρ₂ of the prism (27) of the non-tilting prism rod (21).

6. Rod-shaped light guide of claims 1 to 5, **characterized in that** the opposing faces (2, 3) are adapted to the inclination of the prism rod (1).

## Revendications

1. Guide de lumière en forme de baguette, présentant essentiellement la forme d'une baguette à prismes (1), avec au moins une surface frontale (2) en tant que surface de couplage de la lumière et une surface (4) réfléchissante disposée dans le sens d'un axe longitudinal (6), avec une multitude de prismes (11) déviant la lumière et une surface de sortie de la lumière (5) se trouvant sur le côté opposé de la surface (4) réfléchissante et un niveau de diffusion (13) en saillie de la surface de sortie de la lumière (5) vers lequel la lumière (26) s'échappant de la surface de sortie de la lumière (5) est disposée perpendiculairement avec son sens de diffusion, **caractérisé en ce que** l'axe longitudinal (6) est incliné d'un angle d'inclinaison β_{Pf} (14) par rapport au niveau de diffusion (13) et que la section (23) disposée perpendiculairement à l'axe longitudinal (6) par rapport à une section (24) d'une baguette à prismes (21) sans angle d'inclinaison est cisaillée par un angle de cisaillement β_{sch} de telle sorte que la section (23) de la baguette à prismes (1) présente la forme d'une ellipse.

2. Guide de lumière en forme de baguette selon la revendication 1, **caractérisé en ce que** l'angle de cisaillement β_{sch} se situe dans une plage de grandeur de l'angle d'inclinaison β_{Pt} (14).

3. Guide de lumière en forme de baguette selon la revendication 2, **caractérisé en ce que** l'angle de cisaillement β_{sch} correspond approximativement à l'angle d'inclinaison β_{Pf} (14).

4. Guide de lumière en forme de baguette selon l'une des revendications 1 à 3, **caractérisé en ce que** les prismes (11) de la surface réfléchissante (4) sont adaptés à l'inclinaison prédéfinie par l'angle d'inclinaison β_{Pf} (14).

5. Guide de lumière en forme de baguette selon l'une des revendications 1 à 4, **caractérisé en ce que** la première surface (15) des prismes (11) dirigée vers l'angle d'inclinaison β_{Pf} (14), par rapport à un premier angle d'inclinaison p1 d'un prisme (27) d'une baguette à prismes (21) sans angle d'inclinaison, est réglée d'un angle Δp et que la deuxième surface (18) du côté opposé à l'angle d'inclinaison β_{Pt} (14), par rapport à un deuxième angle d'inclinaison p2 du prisme (27) de la baguette à prismes (21) sans angle d'inclinaison, est descendue de l'angle Δp.

6. Guide de lumière en forme de baguette selon l'une des revendications 1 à 5, **caractérisé en ce que** les surfaces frontales (2, 3) se trouvant face à face sont adaptées à l'inclinaison de la baguette à prismes (1).
